(19) Europäisches Patentamt
European Patent Office
Office européen des brevets

(11) Publication number : **0 526 162 A1**

(12) # EUROPEAN PATENT APPLICATION

(21) Application number : **92306867.0**

(22) Date of filing : **28.07.92**

(51) Int. Cl.$^5$ : **C08L 83/10,** C08L 79/08, C08K 3/22, C08K 3/38

(30) Priority : **02.08.91 US 739610**

(43) Date of publication of application : **03.02.93 Bulletin 93/05**

(84) Designated Contracting States : **DE FR GB IT NL**

(71) Applicant : **GENERAL ELECTRIC COMPANY**
**1 River Road**
**Schenectady, NY 12345 (US)**

(72) Inventor : **Glaser, Raymond Hans**
**4701 Ford Road**
**Mount Vernon, Indiana 47620 (US)**

(74) Representative : **Pratt, Richard Wilson et al**
**London Patent Operation G.E. Technical Services Co. Inc. Essex House 12/13 Essex Street**
**London WC2R 3AA (GB)**

(54) **Flame retardants for siloxane polyetherimide copolymers.**

(57) Siloxane polyetherimide copolymers comprising flame retardant amounts of titanium dioxide and zinc borate show improved flame retarding properties over siloxane polyetherimide copolymers comprising either titanium dioxide or zinc borate alone. These siloxane polyetherimide copolymer compositions can be employed in electrical parts, wire coatings, building materials and airplane and automobile parts.

EP 0 526 162 A1

Background of the Invention

This invention relates to siloxane polyetherimide copolymers that have been modified to enhance their flame retardant properties. More particularly, this invention relates to a combination of titanium dioxide and zinc borate as non-halogenated flame retardants for siloxane polyetherimide copolymers.

Thermoplastic resins, such as siloxane polyetherimides, polyetherimides, polycarbonates and blends thereof, are utilized for electrical parts, wire coatings, building materials, automobile parts and aircraft parts. For example, U.S. patent 4,983,456, issued to Iwaskow et al. in 1991, discloses polymeric compositions of polyetherimides, polyimides, polyetheresters and the like in combination with conductive semi-metallic fibers employed in numerous electrical applications. These thermoplastic elastomeric resins can be exposed to relatively high temperatures, i.e., exceeding 200°C, which can lead to charring of the material or premature breakdown of the crystalline or amorphous structure of the thermoplastic elastomer after prolonged exposure to heat. Consequently, it is most desirable and often required that such materials have high heat resistance and high flame retardant properties.

Many flame retardant compounds that are utilized in thermoplastic elastomers can adversely affect the physical properties of the resin material. Flame retarding additives should not adversely affect other performance criteria. Thus, in addition to achieving flame retardancy and thermal stability, the flame retardant polymeric composition should possess processability, substantially retain its specified physical properties, and exhibit long-term aging compatibility.

U.S. patent 4,833,190, issued to Cella et al. on May 23, 1989 discloses the use of zinc borate to reduce the smoke emission characteristics of silicone-containing compositions, including siloxane polyetherimide copolymers.

U.S. patent 4,992,505, issued to Liu in 1991, discloses flame retardant polyetherimide ester compositions comprising at least one polyetherimide ester resin and a flame-retarding amount of a mixture of at least one polyphosphate ester and at least one ammonium polyphosphate. The polyetherimide esters employed contain imide groups, polyether groups and ester groups in the polymer chain.

U.S. patent 4,977,234, issued to Matsuo et al. in 1990, discloses polycyanoaryl ethers which are heat resistant, flame retardant and solvent resistant. Crystallizing nucleators selected from the group consisting of alumina, aluminum hydroxide, aluminum powder, titanium dioxide and calcium fluoride are employed to crystallize the polycyanoaryl ethers.

U.S. patent 4,985,313, issued to Penneck et al. in 1991, discloses polymeric insulators comprising polyolefins, halogenated polymers or polyether ketones in combination with treated and untreated metal oxide flame retardants such as hydrated alumina and titania.

U.S. Patent 4,642,327, issued to Matzner et al. in 1987, discloses polyetherimides having high temperature properties, toughness and melt processability. These polyetherimides may include additives such as titanium dioxide.

A need exists for siloxane polyetherimide copolymers having improved flame retardant properties.

Summary of the Invention

In accordance with the present invention, flame-resistant compositions comprise a siloxane polyetherimide copolymer in combination with flame retarding amounts of a mixture of titanium dioxide and zinc borate.

The copolymer compositions of the present invention have been found to possess the physical and chemical resistance properties important for applications for electrical parts, wire coatings, building materials and automobile and airplane parts.

Detailed Description of the Invention

The siloxane polyetherimide copolymers used in preparing the flame retardant and thermally stable compositions of the present invention comprise repeating units of the formula

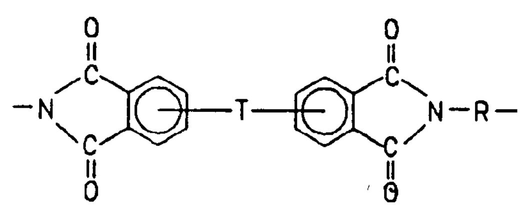

and repeating units of the formula

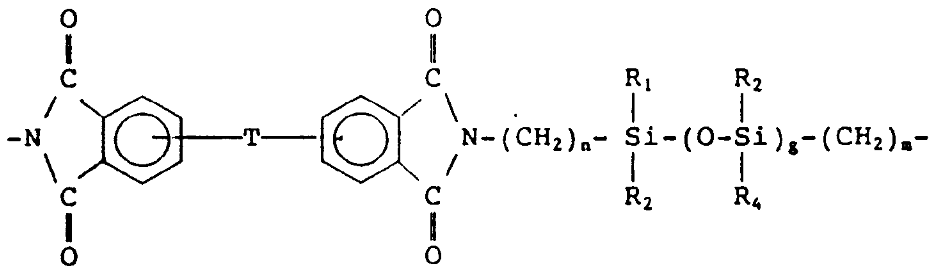

where T is -O- or a group of the formula -O-Z-O- wherein the divalent bonds of the -O- or the -O-Z-O- group are in the 3,3′, 3,4′, 4,3′ or 4,4′ positions; Z comprises (A)

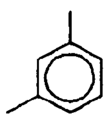 , 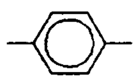 , 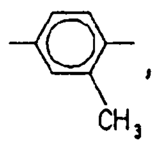 , 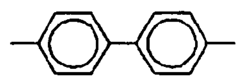 ,

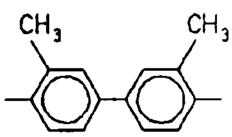 or 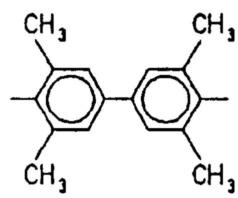

or (B) divalent organic radicals of the general formula

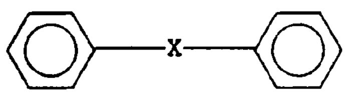

where X comprises divalent radicals of the formula:

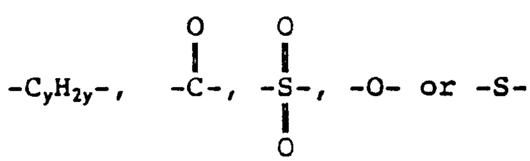

where y is an integer from 1 to about 5; R is a divalent radical organic radical comprising (a) aromatic hydrocarbon radicals having from 6 to about 20 carbon atoms, (b) alkylene radicals having from 2 to about 20 carbon atoms, and (c) divalent radicals of the formula

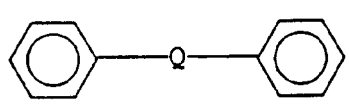

where Q comprises

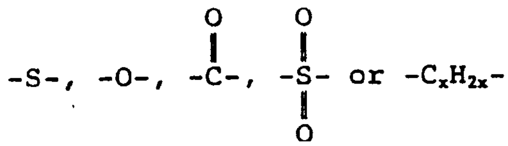

wherein x is an integer from 1 to about 5; and n and m independently are integers from 1 to about 10 and g is an integer from 1 to about 40 and examples of groups represented by R-1 through R-4 are independently, -H, $-CH_3$, $-C_zH_{2z}CH_3$ or phenyl, where z is an integer from 1 to about 5. Preferably, each of R-1 through R-4 is methyl.

The siloxane polyetherimide copolymers also can further comprise repeating polyimide units of the formula

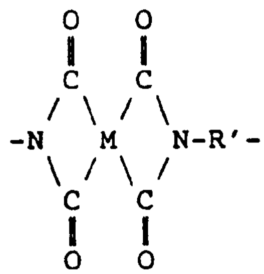

wherein M comprises

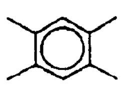, 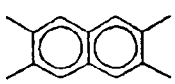 or 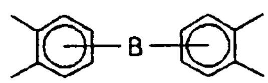

where B is -S- or

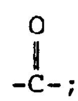

and R′ is R as previously defined or a group of the formula

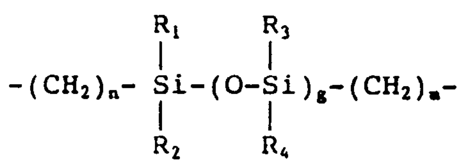

wherein n and m independently are integers from 1 to about 10 and g is an integer of from 1 to about 40 and examples of groups represented by R-1 through R-4 are independently, -H, $-CH_3$, $-C_zH_{2z}CH_3$ or phenyl, where z is an integer from 1 to about 5. Preferably, each of R-1 through R-4 is methyl.

The siloxane polyetherimide copolymers of the present invention can be prepared by any of the methods well known to those skilled in the art, including the reaction of an aromatic bis(ether anhydride) of the formula

(I)

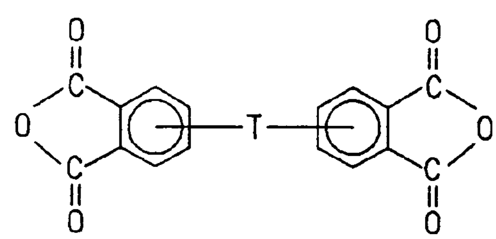

with an amine-terminated organosiloxane of the formula

(II)

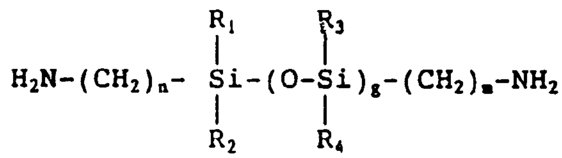

and an organic diamine of the formula

(III) $H_2N\text{-}R\text{-}NH_2$

wherein T and R are as defined above, and n and m independently are integers from 1 to about 10, preferably from 1 to about 5, and g is an integer from 1 to about 40, preferably from 5 to about 25 and examples of groups represented by R-1 through R-4 are independently, -H, $-CH_3$, $-C_zH_{2z}CH_3$ or phenyl, where z is an integer from 1 to about 5. Preferably, each of R-1 through R-4 is methyl.

Bis(ether anhydride)s of formula I include, for example,

1,3-bis(2,3-dicarboxyphenoxy)benzene dianhydride,
1,4-bis(2,3-dicarboxyphenoxy)benzene dianhydride,
1,3-bis(3,4-dicarboxyphenoxy)benzene dianhydride,
1,4-bis(3,4-dicarboxyphenoxy)benzene dianhydride and 4,4′-bis(phthalic anhydride)ether.

A preferred class of aromatic bis(ether anhydride)s covered by formula I includes compounds of formulas IV, V and VI:

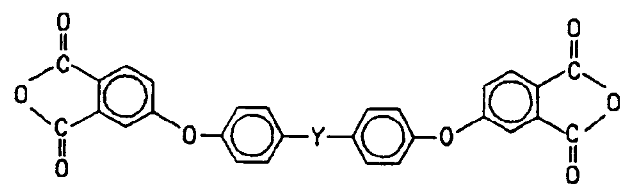

(IV)

(V)

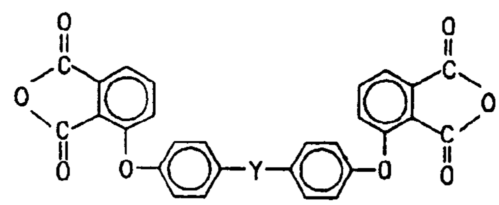

(VI)

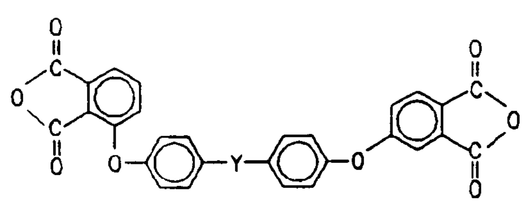

and mixtures thereof, where Y comprises -O-, -S-,

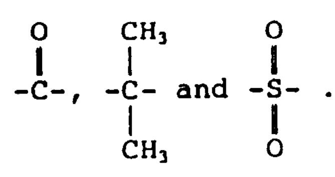

Aromatic bis(ether anhydride)s of formula IV include for example:

2,2-bis[4-(3,4-dicarboxyphenoxy)phenyl] propane dianhydride,
4,4'-bis(3,4-dicarboxyphenoxy)diphenyl ether dianhydride,
4,4'-bis(3,4-dicarboxyphenoxy)diphenyl sulfide dianhydride,
4,4'-bis(3,4-dicarboxyphenoxy)benzophenone dianhydride,
4,4'-bis(3,4-dicarboxyphenoxy)diphenyl sulfone dianhydride and mixtures thereof.

Aromatic bis(ether anhydride)s of formula V include, for example:
2,2-bis([4-(2,3-dicarboxyphenoxy)phenyl]propane dianhydride,
4,4'-bis(2,3-dicarboxyphenoxy)diphenyl ether dianhydride,
4,4'-bis(2,3-dicarboxyphenoxy)diphenyl sulfide dianhydride,
4,4'-bis(2,3-dicarboxyphenoxy)benzophenone dianhydride,
4,4'-bis(2,3-dicarboxyphenoxy)diphenyl sulfone dianhydride and mixtures thereof.

Aromatic bis(ether anhydride)s of formula VI include, for example:
4-(2,3-dicarboxyphenoxy)-4'-(3,4-dicarboxyphenoxy) diphenyl-2,2-propane dianhydride,
4-(2,3-dicarboxyphenoxy)-4'-(3,4-dicarboxyphenoxy) diphenyl ether dianhydride,
4-(2,3-dicarboxyphenoxy)-4'-(3,4-dicarboxyphenoxy) diphenyl sulfide dianhydride,
4-(2,3-dicarboxyphenoxy)-4'-(3,4-dicarboxyphenoxy) benzophenone dianhydride,
4-(2,3-dicarboxyphenoxy)-4'-(3,4-dicarboxyphenoxy) diphenyl sulfone dianhydride and mixtures thereof.

Some of the aromatic bis(ether anhydride)s of formula I are shown in U.S. Patent No. 3,972,902, issued to Heath et al. As described therein, the bis(ether anhydride)s can be prepared by the hydrolysis, followed by dehydration, of the reaction product of a nitrosubstituted phenyl dinitrile with a metal salt of dihydric phenol compound in the presence of a dipolar, aprotic solvent.

Additional aromatic bis(ether anhydride)s also covered by formula I above are disclosed in Koton, M.M., Florinski, F.S., Bessonov, M.I. and Rudakov, A.P. (Institute of Heteroorganic Compounds, Academy of Sciences, U.S.S.R.), U.S.S.R. patent 257,010, November 11, 1969, Appl. May 3, 1967 and by M.M. Koton, F.S. Florinski, Zh. Org. Khin. 4(5), 774 (1968).

The organic diamines of formula III include, for example:
m-phenylenediamine,
p-phenylenediamine,
4,4'-diaminodiphenylpropane,
4,4'-diaminodiphenylmethane (commonly named 4,4'-methylenedianiline),
4,4'-diaminodiphenylsulfide,
4,4'-diaminodiphenyl sulfone,
4,4'-diaminodiphenyl ether (commonly named 4,4'-oxydianiline),
1,5-diaminonaphthalene,
3,3-diamethylbenzedine,
3,3-dimethoxybenzedine,
2,4-bis(beta-amino-t-butylphenyl)toluene,
bis(p-beta-amino-t-butylphenyl)ether,
bis(p-beta-methyl-o-aminophenyl)benzene,
1,3-diamino-4-isoprophenyl)benzene,
1,2-bis(3-aminopropoxy)ethane,
benzidine,
m-xylenediamine,
2,4-diaminotoluene,
2,6-diaminotoluene,
bis(4-aminocyclohexyl)methane,
3-methylheptamethylenediamine,
4,4-dimethylheptamethylenediamine,
2,11-dodecanediamine,
2,2-dimethylpropylenediamine,
octamethylenediamine
3-methoxyhexamethylenediamine,
2,5-dimethylhexamethylenediamine,
3-methylheptamethylenediamine,
5-methylnonamethylenediamine,
1,4-cyclohexanediamine,
1,12-octadecanediamine,

bis(3-aminopropyl)sulfide,
N-methyl-bis(3-aminopropyl)amine,
hexamethylenediamine,
nonamethylenediamine,
decamethylenediamine and mixtures thereof.

Preferred siloxane polyetherimides are commercially available from General Electric Company, Pittsfield, Massachusetts U.S.A. under the registered trademarks Ultem and Siltem.

The amine-terminated organosiloxane of formula II and the organic diamine of formula III can be physically mixed prior to reaction with bis(ether anhydride)(s), thus forming a substantially random copolymer. Alternatively , block or alternating copolymers can be formed by forming prepolymers or sequential addition of reactants, as is well-known in the polymer arts.

Preferred amine terminated organosiloxanes are those of formula II, in which n and m are each 3, and which have a molecular weight distribution such that g has an average value ranging from about 9 to about 20.

The diamine component of the siloxane polyetherimide copolymers generally comprise from about 20 to about 50 mole % of the amine-terminated organosiloxane of formula II and from about 50 to about 80 mole % of the organic diamine of formula III. In preferred copolymers, the diamine component comprises from about 25 to about 40 mole %, most preferably about 30 mole % of the amine-terminated organosiloxane.

The siloxane polyetherimide copolymers of the present invention can be prepared by any of the procedures conventionally used for preparing siloxane polyetherimides. U.S. Patent No. 4,417,044, discloses methods which can be employed to prepare siloxane polyetherimide copolymers, and is incorporated herein by reference.

A flame retarding and thermal-stabilizing amount of a mixture of titanium dioxide and zinc borate is employed in the compositions of this invention. A preferred means of preparing these compositions is to melt blend the titanium dioxide and zinc borate with the copolymer. This blending may be accomplished by procedures known in the art, e.g., in an extruder or other heated mixing apparatus. Alternatively, the titanium dioxide and zinc borate may be mixed with the above-described reactants during the synthesis and polymerization of the siloxane polyetherimide copolymers.

The titanium dioxide is added in amounts ranging from about 2 to about 15% by weight of the copolymer composition. Preferred amounts range from about 5 to about 10% by weight. Zinc borate is employed in amounts ranging from about 2 to about 10% by weight, preferably from about 5 to about 10% by weight. Preferably, the titanium dioxide and zinc borate are used in about a 1:1 ratio.

The titanium dioxide employed can be any suitable form which can be mixed with the reactants of siloxane polyetherimide copolymers. Titanium dioxide employed to practice this invention can be commercially obtained from various manufacturers under numerous tradenames. For example, Zopaque® (manufactured by SCM Chemicals), Ti-pure® (manufactured by E.I. du Pont de Nemours & Co., Inc.), Titanox® (manufactured by NL Chemicals and NL Chem Canada Inc.), Tiso-Lit® (manufactured by Gulf and Western), fine particle size titanium dioxide manufactured, for example, by Degussa (as grade P-25) and Tioxide UK Ltd., and the like are commercially available titanium dioxide products which can be employed to practice this invention. In general, the titanium dioxide used in the compositions of this invention have particle sizes ranging from about 20 nanometers to about 200 nanometers or more. The higher particle-sized titanium dioxides are typically known as pigment grade materials. The lower particle-sized materials often are used for ultraviolet light absorption. For use in the present compositions, it has been found that optimum flame retardance and thermal stability can be achieved with lower concentrations of smaller particle-sized titanium dioxides (e.g., mean particle size of about 20 nanometers) than with the pigment grade materials.

The zinc borate employed to practice this invention is a finely divided form of a partially dehydrated salt. It has been found that partially dehydrated forms of zinc borate are effective flame retardants for siloxane polyetherimide copolymers and do not cause foaming during processing. Fully hydrated forms of zinc borate lose water of hydration at normal processing temperatures. The evolution of water vapor results in foaming and undesirable physical characteristics of the resulting resin.

The zinc borate employed in this invention has a water content of less than about 20%, preferably less than about 15% by weight. These zinc borate advantageously does not lose substantial amounts of water of hydration at or below normal processing temperatures, e.g., about 600°F. Preferred zinc borates undergo less than about a 5% weight loss, most preferably less than a 2% weight loss at 600°F.

The zinc borate used in these compositions is a finely divided material having an average particle size ranging from about 0.5 to about 200 microns. Preferred zinc borates have an average particle size of less than about 30 microns. It has been found that the flame-retarding effects of the zinc borate are more pronounced at lower particle size. Accordingly, as the particle size decreases, the concentration of zinc borate in the polymer compositions may also decrease.

Partially hydrated zinc borate for use in the compositions of this invention are commercially available. A particularly preferred material is sold by Climax Performance Materials Corp., Greenwich, Connecticut, under the designation ZB-467.™

The addition of titanium dioxide and zinc borate to siloxane polyetherimide copolymers in amounts specified herein improves the flame retardant characteristics of the copolymer material. Specifically, addition of titanium dioxide and zinc borate lowers the 2 minute heat release (2MHR) and peak heat release rate (PHRR) as measured by the Ohio State University (OSU) rate-of-release apparatus and also the maximum smoke density ($D_s$ max) as measured by the National Bureau of Standards Smoke Chamber as compared to siloxane polyetherimide copolymers without titanium dioxide and zinc borate as well as siloxane polyetherimide copolymers comprising either titanium dioxide or zinc borate.

In addition to the copolymeric materials, zinc borate and titanium dioxide, the compositions of this invention can optionally comprise other materials such as fillers, additives, reinforcing agents and the like. Examples of such optional materials include, but are not limited to, glass fiber, glass spheres, mica, clay, carbon fiber, carbon powder and the like.

The following examples are provided to further illustrate this invention but are not intended to limit its scope.

Example 1

The siloxane polyetherimide copolymers employed in this experiment were obtained from the General Electric Company, under the trademark ULTEM® D9000 or SILTEM®. The titanium dioxide employed in this experiment was Zopaque® R69 and the zinc borate employed was ZB-467™ obtained from Climax Performance Materials Corp.

The siloxane polyetherimide copolymer employed in this experiment was a random copolymer and a reaction product of a mixture of 60 mole % of m-phenylenediamine and 40 mole % of an amine terminated organosiloxane of formula II, wherein n and m are 3 and g has an average value of about 9, with 2,2-bis[4-(3,4-dicarboxyphenoxy )phenyl]propane dianhydride. Seven separate test samples of the siloxane polyetherimide copolymer were prepared. Titanium dioxide was melt blended in variable amounts ranging from about 10 to about 15% by weight with four of the seven test samples Zinc borate also was melt blended with four of the test samples. Test samples 4 and 5 comprised siloxane polyetherimide copolymer along with titanium dioxide and zinc borate. Test samples 2 and 3 comprised copolymer and titanium dioxide, test samples 6 and 7 comprised zinc borate with the copolymer, and test sample 1 was a control containing only the copolymer. The 2 minute heat release, peak heat release rate and maximum smoke density were measured on several replicates of each sample. Table 1 discloses the results of these experiments. Test samples 4 and 5, which comprised siloxane polyetherimide copolymer in combination with both titanium dioxide and zinc borate, had lower 2 MHR, PHRR and NBS values than the test samples without titanium dioxide and zinc borate and test samples containing either titanium dioxide or zinc borate. Clearly, the addition of titanium dioxide and zinc borate to siloxane polyetherimide copolymer increases flame retardance in a siloxane polyetherimide copolymer. The copolymer employed was a so-called "random copolymer" which may, in fact, also comprise alternating short segments of polyetherimide and siloxane segments.

TABLE 1

| | 1 | 2 | 3 | 4 | 5 | 6 | 7 |
|---|---|---|---|---|---|---|---|
| ULTEM® D9000-1000 | 100.0 | 90.0 | 85.0 | 87.4 | 84.6 | 95.0 | 85.0 |
| $TiO_2$ (ZOPAQUE R69) | - | 10.0 | 15.0 | 10.6 | 10.4 | - | - |
| ZINC BORATE (ZB467) | - | - | - | 2.0 | 5.0 | 5.0 | 15.0 |
| FR PROPERTIES | | | | | | | |
| 2 MHR ($KW*Min/m^2$) | 68* | 31* | 31* | 27 | 24 | 56 | 70 |
| PHRR ($KW/m^2$) | 106* | 72* | 75* | 65 | 60 | 84 | 87 |
| NBS SMOKE Ds max | 212* | 73* | 120* | 50 | 15 | 52 | 120 |

* Average of several experiments.

## Claims

1. A copolymer composition comprising (a) from about 65% to about 96% by weight of a siloxane polyetherimide copolymer, (b) from about 2% to about 15% by weight of titanium dioxide and (c) from about 2% to about 10% by weight of zinc borate having a water content of less than about 20 weight % and an average particle size of from 0.5 to 200 microns, wherein the siloxane polyetberimide copolymer comprises repeating units of the formula

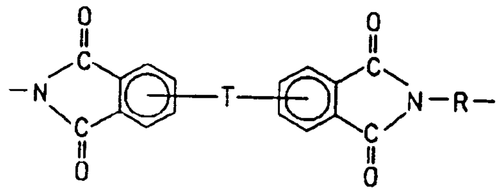

and repeating units of the formula

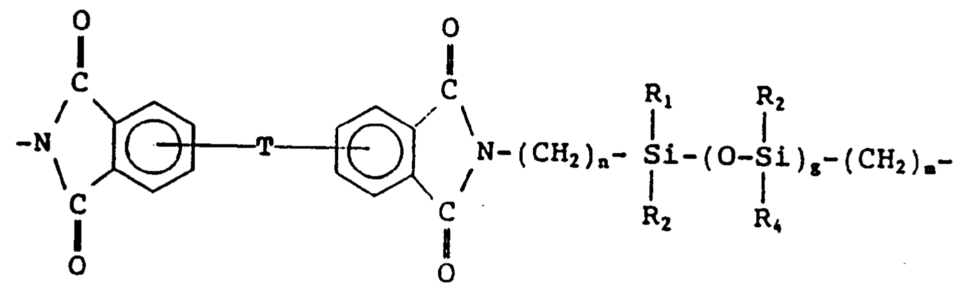

wherein T is -O- or a group of the formula

-O-Z-O-

wherein the divalent bonds of the -O- of the

-O-Z-O-

group are in the 3,3', 3,4', 4,3'or 4,4'positions; Z is (A)

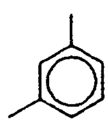 , 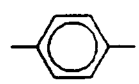 , 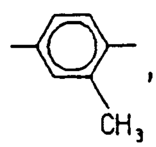 , 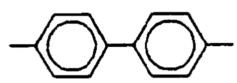 ,

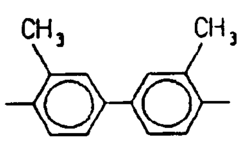 or 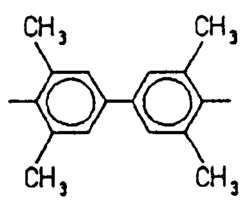

or (B) divalent organic radicals of the general formula

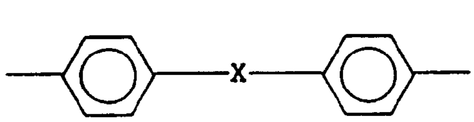

where X is a divalent radical of the formula

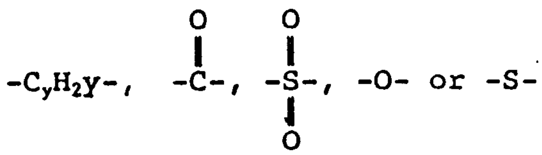

wherein y is an integer from 1 to about 5; and R is a divalent organic radical selected from the group consisting of (a) aromatic hydrocarbon radicals having from 6 to about 20 carbon atoms, (b) alkylene radicals having from 2 to about 20 carbon atoms and divalent radicals (c) of the formula

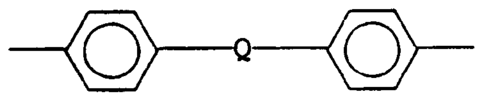

wherein Q is

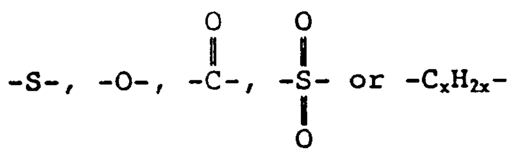

wherein x is an integer from 1 to about 5; and n and m independently are integers from 1 to about 10 and g is an integer from 1 to about 40 and $R_1$ through R independently are selected from the group consisting of -H, $-CH_3$, $-C_zH_{2z}CH_3$ or phenyl, where z is an integer from 1 to about 5.

**2.** The copolymer composition of claim 1, wherein the siloxane polyetherimide copolymer further comprises repeating units of the formula

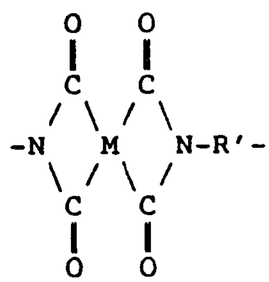

wherein M is

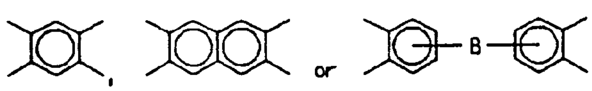

, or

where B is -S- or

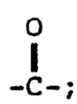

and R′ is R or a group of the formula

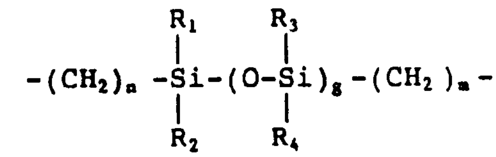

wherein n and m independently are integers from 1 to about 10 and g is an integer from 1 to about 40.

3. The copolymer composition of Claim 1 or Claim 2, wherein n and m are integers from 1 to about 5, g is an integer from 5 to about 25 and each of $R_1$ through $R_4$ is methyl.

4. The copolymer composition of any one of Claims 1 to 3 wherein the siloxane polyetherimide copolymer is substantially a random copolymer.

5. The copolymer composition of any one of Claims 1 to 3, wherein the siloxane polyetherimide copolymer is a block polymer.

6. The copolymer composition of any preceding claim, wherein the siloxane polyetherimide copolymer is an alternating copolymer.

7. The copolymer composition of any preceding claim, wherein the titanium dioxide concentration ranges from about 5 to about 10% by weight of the composition and the average particle size of the titanium dioxide ranges from about 20 to about 200 microns.

8. The copolymer composition of any preceding claim, wherein the zinc borate concentration ranges from about 5 to about 10% by weight of the composition, the average particle size of the zinc borate ranges from about 0.5 to about 200 microns and the zinc borate is characterized by a weight loss of less than about 5% at 600°F.

9. The copolymer composition of any preceding claim, where in the zinc borate has an average particle size from about 0.5 to about 30 microns and is characterized by a weight loss of less than about 2% at 600°F.

10. The copolymer composition of any preceding claim, wherein the siloxane polyetherimide copolymer comprises from about 80 to about 90% by weight of the composition, titanium dioxide comprises from about 5 to about 10% by weight of the composition, and zinc borate comprises from about 5 to about 10% by weight of the composition.

11. The copolymer composition of any preceding claim, wherein the siloxane polyetherimide copolymer contains repeating units of the formula

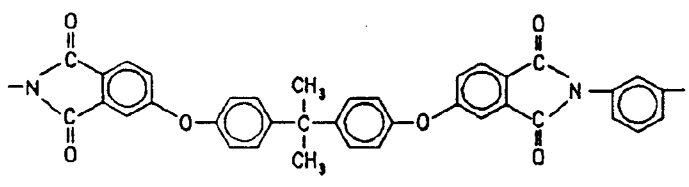

and

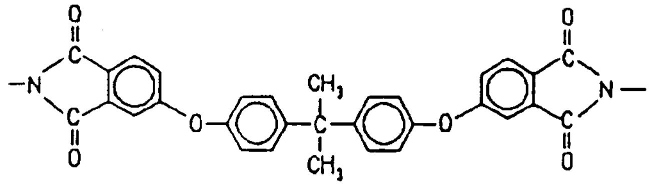

$$-(CH_2)_3-\underset{\displaystyle CH_3}{\overset{\displaystyle CH_3}{\underset{|}{\overset{|}{Si}}}}-(O-\underset{\displaystyle CH_3}{\overset{\displaystyle CH_3}{\underset{|}{\overset{|}{Si}}}})_g-(CH_2)_3-$$

wherein g has an average value of from about 9 to about 20.

European Patent Office

# EUROPEAN SEARCH REPORT

Application Number

EP 92 30 6867

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| Y,P | EP-A-0 491 518 (AMERICAN TELEPHONE AND TELEGRAPH COMPANY)<br>* claims 1,5,6 *<br>* page 4, line 32 - line 40; claim 1 * | 1-11 | C08L83/10<br>C08L79/08<br>C08K3/22<br>C08K3/38 |
| Y<br><br><br>D | GB-A-2 193 216 (GENERAL ELECTRIC COMPANY)<br>* claims 1,13,15-21 *<br>* page 4, line 46 - line 62 *<br>& US-A-4 833 190 (CELLA ET AL.) | 1-11 | |
| Y | EP-A-0 307 670 (GENERAL ELECTRIC COMPANY)<br>* claims 22-34 *<br>* page 8, line 42 - line 45 *<br>* page 9, line 37 - line 54 * | 1-11 | |
| A | EP-A-0 411 303 (GENERAL ELECTRIC COMPANY)<br>* claims 1-4,6,7 * | 1 | |
| A,P | WO-A-9 200 348 (AMOCO CORPORATION)<br>* claims 7,8 *<br>* page 3, line 29 - page 4, line 8 *<br>* page 6, line 16 - line 34 *<br>* page 17, line 13 - line 35 *<br>* page 19, line 30 - page 20, line 13 * | 1 | TECHNICAL FIELDS SEARCHED (Int. Cl.5 ) |
| A | DATABASE WPIL<br>Section Ch, Week 8515, 5 June 1985<br>Derwent Publications Ltd., London, GB;<br>Class A26, AN 85-089681<br>& JP-A-60 038 464 (SUMITOMO CHEMICAL K.K.)<br>28 February 1985<br>* abstract * | 1 | C08K<br>C08L |

The present search report has been drawn up for all claims

| Place of search | Date of completion of the search | Examiner |
|---|---|---|
| THE HAGUE | 12 OCTOBER 1992 | HOLLENDER C.J.F |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)